# EUROPÄISCHE PATENTANMELDUNG

(11) **EP 4 610 066 A1**
(43) Veröffentlichungstag der Anmeldung: **03.09.2025**
(21) Anmeldenummer: 25158346.4
(22) Anmeldetag: 17.02.2025
(51) Int. Cl.: B60C 23/04

(54) **VERFAHREN ZUM BETRIEB EINES REIFENDRUCKKONTROLLSYSTEMS**

(30) Priorität: 29.02.2024 DE 102024105735
(71) Anmelder: ZF CV Systems Europe BV, 1170 Brüssel (BE)
(72) Erfinder: RODENBERG, Alexander, 38102 Braunschweig (DE); KAMINSKI, Jan Leon, 30539 Hannover (DE); STENDER, Axel, 31787 Hameln (DE)
(74) Vertreter: Ohlendorf, Henrike

(57) **Zusammenfassung**

In einem Verfahren zum Betrieb eines Reifendruckkontrollsystems wird in einem Fahrzeug ein Reifendruck durch ein Reifensensormodul überwacht. Das Reifensensormodul weist einen Drucksensor und eine über Antennen im Fahrzeug mit einem Steuergerät des Fahrzeugs kommunizierende Sendeeinheit auf. Das Reifensensormodul übermittelt periodisch einen Sensordatensatz an das Steuergerät, der mindestens Daten für den Reifendruck sowie Daten zur Identifikation des Reifensensormoduls enthält. Im Reifensensormodul ist eine programmierbare Recheneinheit mit einem Algorithmus vorgesehen, der dem zu übermittelnden Sensordatensatz Warnsignaldaten hinzufügt, wenn durch den Drucksensor ein Absinken des Reifendrucks in einem überwachten Reifen über einen vorgegebenen maximal zulässigen Betrag hinaus detektiert wird. Dabei sind in einem Speicher der Recheneinheit Reifendruckwerte als Daten einer lastabhängigen Reifendruckkennlinie oder -tabelle hinterlegt. Die jeweils aktuelle Achslast wird durch Lastsensoren ermittelt, als Daten an die Recheneinheit übermittelt und dort in einem Speicher hinterlegt. Im Algorithmus wird der sich gemäß Achslast aus den Daten der lastabhängigen Reifendruckkennlinie ergebende Reifendruck als Ausgangswert für die Detektion des maximal zulässigen Betrags des Absinkens zugrunde gelegt. In dem Sensordatensatz werden Warnsignaldaten hinzugefügt, wenn der Reifendruck den sich aus der lastabhängigen Reifendruckkennlinie oder -tabelle ergebenden Reifendruck über den zulässigen Betrag hinaus unterschreitet, wobei die Warnsignaldaten durch das Steuergerät zur Erzeugung eines Warnsignals verarbeitbar sind.

## Beschreibung

Die Erfindung betrifft ein Verfahren zum Betrieb eines Reifendruckkontrollsystems in einem Fahrzeug, bei dem ein Reifendruck eines Fahrzeugrades durch ein dem Fahrzeugrad zugeordnetes Reifensensormodul (RSM) überwacht wird, welches einen Drucksensor und eine über Antennen im Fahrzeug mit einem elektronischen Steuergerät des Fahrzeugs kommunizierende Sendeeinheit aufweist, wobei das Reifensensormodul periodisch einen Sensordatensatz an das Steuergerät übermittelt, der mindestens vom Drucksensor ermittelte Daten für den Reifendruck (Druckdaten) sowie Daten zur eindeutigen Identifikation des Reifensensormoduls (Identifikationsdaten) enthält.

Weiterhin betrifft die Erfindung ein zur Durchführung des Verfahrens geeignetes Reifensensormodul in einem Reifendruckkontrollsystems zur Überwachung eines Reifendrucks an einem Fahrzeugrad, sowie ein Computerprogramm für eine Recheneinheit eines solchen Reifensensormoduls und ein Fahrzeug mit einem solchen Reifensensormodul.

Eine Reifendrucküberwachung durch ein Reifendruckkontrollsystem, bei dem der Reifendruck in Fahrzeugrädern ermittelt und bei einer Unterschreitung oder Überschreitung von vorgegebenen Grenz- oder Schwellenwerten eine Warnung ausgegeben wird, ist heute in vielen Fahrzeugen vorgeschrieben. Ohne ein solches Reifendruckkontrollsystem ist in vielen Fahrzeugklassen keine Typgenehmigung zu erhalten.

Ein fehlerhafter Reifendruck hat nicht nur einen erheblichen Einfluss auf ein Fahrverhalten eines Fahrzeugs und kann im Extremfall ursächlich für Unfälle sein, sondern führt auch zu einem erhöhten Energieverbrauch im Betrieb des Fahrzeuges und somit zu erhöhten CO₂-Emissionen. Fehlerhafter Reifendruck führt zu einem merklich höheren Verschleiß eines Reifens und damit zu seinem vorzeitigen Austausch.

Bei zu niedrigem Reifendruck verringert sich eine idealerweise erreichbare Reifenaufstandsfläche auf einer Fahrbahn, da nur in seitlichen Bereichen des Reifens ausreichender Kontakt zu einer Fahrbahnoberfläche besteht, während sein mittlerer Bereich von der Fahrbahnoberfläche weg in Richtung Felge gewölbt ist. Der Reifen beginnt dadurch zu walken, wodurch sich Rollwiderstand und Kraftstoffverbrauch erhöhen. Ebenfalls ist eine starke Temperaturerhöhung des Reifens zu erwarten.

Ein zu hoher Reifendruck führt dazu, dass sich eine Auflage nur in einem mittleren Bereich der idealerweise erreichbaren Reifenaufstandsfläche ausbildet. So ist sowohl bei zu niedrigem Reifendruck als auch bei zu hohem Reifendruck eine abnehmende Bodenhaftung des Reifens zu verzeichnen, ein Bremsweg verlängert sich und insbesondere in Kurven besteht ein erhöhtes Risiko, dass erforderliche Seitenführungskräfte des Reifens, die das Fahrzeug in einer Spur halten sollen, nicht mehr erreicht werden.

Der Reifendruck ist also eine der wesentlichen Grundlagen für eine Sicherheit des Fahrzeugs. Die ideale Reifenaufstandsfläche ist dabei nur mit einem optimalen Reifendruck zu erreichen, der eine vorgegebene Reifenkonstruktion berücksichtigt und davon ausgehend an eine Reifenbelastung bzw. Achslast und eine Temperatur angepasst ist, wie im Weiteren beschrieben.

Aus diesem Grunde gibt es in vielen Ländern Vorschriften, insbesondere auch europaweite verpflichtende Regelungen, die einen Einsatz von Reifendruckkontrollsystemen vorschreiben. Zu nennen ist hier beispielsweise die UN ECE-R141 der Wirtschaftskommission der Vereinten Nationen für Europa (UNECE), die einheitliche Bedingungen für eine Genehmigung von Kraftfahrzeugen hinsichtlich ihrer Reifendrucküberwachungssysteme betrifft und darauf abzielt, Sicherheit und Effizienz von Reifendrucküberwachungssystemen in Fahrzeugen zu gewährleisten. Die UN ECE-R141 enthält unter anderem Prüfvorschriften für Reifendrucküberwachungssysteme und Bedingungen für eine Typgenehmigung (Homologation) von Reifendruckkontrollsystemen unterschiedlicher Fahrzeugtypen hinsichtlich dieser Reifendruckkontrollsysteme.

Es gibt zwei Haupttypen von Reifendruckkontrollsystemen, nämlich direkt messende (direkte) und indirekt messende (indirekte) Systeme.

Indirekt messende Reifendruckkontrollsysteme errechnen Abweichungen des Reifendrucks aus Drehzahlunterschieden, die sich aus veränderten, vom Luftdruck im Reifen abhängigen Abrollradien der Räder bzw. Reifen ergeben. Dabei werden Raddrehzahlsensoren eines im Fahrzeug vorhandenen Antiblockiersystems verwendet. Die indirekt messenden Systeme sind zwar etwas kostengünstiger zu installieren als die direkt messenden Systeme, konnten sich aber aufgrund ihrer niedrigeren Genauigkeit und Reproduzierbarkeit im Vergleich zu direkt messenden Systemen bisher am Markt nicht durchsetzen.

Heute kommen daher nahezu ausschließlich direkt messende Systeme zum Einsatz, bei denen die Reifendrücke unmittelbar und sehr genau durch Drucksensoren erfasst werden. Die Drucksensoren sind dabei in einem Reifensensormodul angeordnet, welches entweder in Reifenventilen eingebaut oder aber auch an einer Radfelge so vorgesehen ist, dass es mit einem Reifenvolumen bzw. einem Reifeninnenraum in Kontakt ist.

Im Stand der Technik bekannte Reifensensormodule besitzen neben dem Drucksensor jeweils eine Sendeeinheit oder eine Sende- und Empfangseinheit, in vielen Fällen eine Batterie, einen Temperatursensor und gegebenenfalls auch einen Beschleunigungssensor.

Über ihre Sendeeinheit und über entsprechende Antennen im Fahrzeug kommunizieren die Reifensensormodule mit einem elektronischen Steuergerät des Fahrzeugs und senden periodisch, beispielsweise etwa alle 40 Sekunden, einen Sensordatensatz an das Steuergerät. Der Sensordatensatz enthält mindestens die vom Drucksensor ermittelten Daten für den Reifendruck (Druckdaten) und Daten zur eindeutigen Identifikation des Reifensensormoduls (Identifikationsdaten, auch als Sensor-ID bezeichnet). Im Sensordatensatz können ggf. weitere Daten enthalten sein, wie Temperaturdaten eines Temperatursensors oder Triggerdaten. Unter dem Begriff Triggerdaten versteht man Daten, die beim Empfänger, etwa bei einem Steuergerät eines Fahrzeugs, bestimmte Ereignisse oder Funktionen auslösen. So erfolgt etwa ein Erkennen eines Reifensensormoduls durch das Steuergerät nach einem Reifen- oder Radwechsel durch Triggerdaten, die vom Reifensensormodul entweder automatisch oder auf eine externe Aktivierung hin erzeugt werden. Eine externe Aktivierung kann dabei manuell mithilfe eines in der Nähe des Reifensensormoduls gehaltenen Handfunkgerätes erfolgen.

Schon länger hat sich auch für schwere Nutzfahrzeuge und Lastkraftwagen, für Busse, Sattelauflieger und Anhängefahrzeuge der Einsatz von Reifendruckkontrollsystemen durchgesetzt, nicht allein aus den oben genannten Sicherheitserwägungen, sondern auch aus wirtschaftlichen Gründen. Dabei handelt es sich nahezu ausnahmslos um direkt messende Systeme.

Im Betrieb von Nutzfahrzeugen verändern sich bei unterschiedlichen Beladungen die jeweils vorhandenen Achslasten erheblich. So sind beispielsweise bei Leerfahrten oder beim Transport von Leichtbauplatten völlig andere Achslasten vorhanden als beim Transport von Stahlträgern oder Maschinenteilen.

Der optimale Reifendruck zu Bereitstellung der oben beschriebenen idealerweise erreichbaren Reifenaufstandsfläche ist temperaturabhängig und insbesondere lastabhängig, also abhängig von einer Belastung der Achsen und somit einer Belastung der an der Achse befindlichen Fahrzeugräder und Reifen. Bezüglich der Fahrzeugsicherheit kann es etwa bei sehr niedrigen Belastungen und/oder geringen Beladungen sinnvoll sein, den Reifendruck auf den optimalen Reifendruck zu reduzieren, etwa durch Luftablassen, und den Reifendruck so an die augenblicklich vorliegende Beladung des Fahrzeugs anzupassen. Vice versa wäre für sehr hohe Beladungen evtl. eine Erhöhung des Reifendrucks angebracht, etwa durch Druckluftzufuhr in den Reifen innerhalb vorgegebener Grenzen. Einige Nutzfahrzeuge sind daher mit Druckregelsystemen ausgerüstet.

Bei einer Reduzierung des Reifendrucks ergibt sich aber eine gewisse Problematik in Bezug auf die Typgenehmigung eines Reifendruckkontrollsystems nach der oben genannten UN ECE-R141. In der UN ECE-R141 ist beispielsweise gefordert, dass spätestens nach zehn Minuten kumulierter Fahrtzeit ein Warnsignal zum Aufleuchten gebracht werden muss, wenn ein Betriebsdruck in einem überwachten Reifen um einen bestimmten Betrag abgesunken ist. Dort ist der Betrag auf 20% des Betriebsdrucks begrenzt. Als "Betriebsdruck" bei Fahrzeugbetrieb wird dort derjenige Reifendruck bezeichnet, der sich aufgrund der Erwärmung durch den Fahrzeugbetrieb im Reifen einstellt.

Die UN ECE-R141 schreibt für die Typgenehmigung eine Prüfung des Reifendruckkontrollsystems vor. Diese Prüfung ist bei einem vom Fahrzeughersteller oder Reifenhersteller für den kalten Reifen vorzugebenden Reifeninnendruck durchzuführen. Die Prüfung kann bei einer bestimmten Beladung oder aber in einem unbeladenen Zustand des Fahrzeugs durchgeführt werden.

Somit erfolgt die Typgenehmigung eines Reifendruckkontrollsystems unter Zugrundelegung bestimmter Parameter, nämlich bei einem bestimmten Beladungszustand und einem vom Hersteller definierten Reifeninnendruck als Referenzdruck, der nach Erwärmung durch Fahrzeugbetrieb vom Drucksensor eines Reifensensormoduls als Betriebsdruck gemessen wird. Das Reifendruckkontrollsystem ist also auf den Referenzdruck kalibriert, der Betriebsdruck ergibt sich durch die jeweiligen Betriebsbedingungen und wird ggf. über eine Temperaturkompensation auf einen Druck für den kalten Reifen/Referenzdruck zurückgerechnet.

Würde aber bei Betrieb des Fahrzeugs mit geringer Ladung der Reifeninnendruck zum Zwecke der oben geschilderten Anpassung erniedrigt, könnte der Referenzdruck bzw. Betriebsdruck so weit unterschritten werden, dass durch das Reifendruckkontrollsystem die Ausgabe eines Warnsignals erfolgt, ohne dass ein die Fahrsicherheit tatsächlich beeinflussender Druckverlust durch technische Fehlfunktionen, Diffusion oder Durchschlag entstanden wäre.

Um das zu vermeiden, muss entweder ein für die Beladung zu hoher Reifendruck akzeptiert oder nach anderen Lösungen gesucht werden. So könnte man etwa überlegen, nicht nur den tatsächlich im Reifen vorhandenen Reifendruck aktiv zu verändern, beispielsweise durch Ablassen von Druckluft aus dem Reifen, sondern auch den als Ausgangspunkt zur Ausgabe eines Warnsignals dienenden Referenzdruck nachträglich durch einen manuellen Eingriff in der Steuerung des Reifendruckkontrollsystems anzupassen, sofern und solang bestimmte in der Typgenehmigung vorgesehen Toleranzwerte nicht überschritten würden.

Aufgrund des Zusammenspiels mit weiteren Regelungen, z.B. der Regelung UN ECE-R156, die Bestimmungen und Anforderungen für eine Zulassung von Fahrzeugen in Bezug auf Software-Updates und ein Software-Update-Management-System enthält, würde eine nachträgliche Anpassung bzw. Parametrierung des Referenzdrucks als Eingriff in die Steuerung bzw. Software gelten. Eine solcher Eingriff wäre ohne neuerliche Freigabe der Software und erneute Genehmigung nicht erlaubt. Freigabe und Genehmigung einer Softwareanpassung verursachen aber einen erheblichen Aufwand und hohe Kosten.

Es ergibt sich also ein Zielkonflikt dadurch, dass einerseits ein auf den Beladungszustand anpassbarer Reifendruck wünschenswert wäre, andererseits aber erteilte Genehmigungen sich auf einen Referenzdruck beziehen und eine Anpassung des Reifendrucks auf die Belastung/Beladung des Fahrzeugs nicht ohne eine neue Genehmigung der Software für ein Reifendruckkontrollsystem möglich ist.

Für die Erfindung bestand also die Aufgabe, ein Verfahren zum Betrieb eines Reifendruckkontrollsystems vorzuschlagen, mit dem es möglich wird, eine Anpassung des Reifendrucks auf unterschiedliche Fahrzeugbeladungen durchzuführen, ohne bei einem Einsatz regelungskonformer, typgenehmigter Reifendruckkontrollsysteme wiederholt eine erneute Freigabe und Genehmigung für unterschiedliche Reifendruckwerte durchführen zu müssen.

Gelöst wird die Aufgabe durch die Merkmale des unabhängigen Anspruchs. Weitere Ausführungen des Verfahrens sind in den abhängigen Ansprüchen enthalten. Ebenfalls offenbart ist ein zur Durchführung des erfindungsgemäßen Verfahrens geeignetes Reifensensormodul in einem Fahrzeug, ein Computerprogramm für eine Recheneinheit eines solchen Sensormoduls, sowie ein Fahrzeug mit einem solchen Reifensensormodul. Eine weitere Verwendung wesentlicher Schritte des erfindungsgemäßen Verfahrens ist ebenso offenbart.

Dabei wird zum Betrieb eines Reifendruckkontrollsystems in einem Fahrzeug, bei dem ein Reifendruck eines Fahrzeugrades durch ein dem Fahrzeugrad zugeordnetes Reifensensormodul (RSM) überwacht, welches einen Drucksensor und eine über Antennen im Fahrzeug mit einem elektronischen Steuergerät des Fahrzeugs kommunizierende Sendeeinheit aufweist. Das Reifensensormodul übermittelt periodisch einen Sensordatensatz an das Steuergerät, der mindestens vom Drucksensor ermittelte Daten für den Reifendruck (Druckdaten) sowie Daten zur eindeutigen Identifikation des Reifensensormoduls (Identifikationsdaten) enthält.

Dabei ist im Reifensensormodul eine programmierbare Recheneinheit vorgesehen, in der ein Algorithmus programmiert ist, durch welchen dem zu übermittelnden Sensordatensatz weitere Daten (Warnsignaldaten) hinzugefügt werden, wenn im Betrieb des Fahrzeugs durch den Drucksensor ein Absinken des Reifendrucks in einem überwachten Reifen über einen vorgegebenen maximal zulässigen Betrag hinaus detektiert wird.

Die dem Sensordatensatz hinzugefügten Daten (Warnsignaldaten) sind durch das Steuergerät zur Erzeugung eines Warnsignals über vom Steuergerät ansprechbare Signalausgabegeräte im Fahrzeug verarbeitbar.

Weiterhin sind in einem Speicher der Recheneinheit des Reifensensormoduls Reifendruckwerte als Daten einer lastabhängigen Reifendruckkennlinie oder Reifendrucktabelle hinterlegt, wobei die Reifendruckkennlinie oder Reifendrucktabelle die Abhängigkeit eines aufgrund einer Reifenkonstruktion erforderlichen Reifendrucks von einer durch Beladung und Gewicht des Fahrzeugs erzeugten Achslast (bzw. Radlast) darstellt. Die beladungs- bzw. lastabhängige/achslastabhängige Reifendruckkennlinie oder Reifendrucktabelle wird von einem Reifenhersteller und/oder Fahrzeughersteller bereitgestellt und dann in der Recheneinheit hinterlegt. Der durch die Reifendruckkennlinie oder Reifendrucktabelle vorgegebene Reifendruckwert stellt damit einen von Beladung und Gewicht abhängigen Referenzdruck dar.

Mit der Reifendruckkennlinie oder Reifendrucktabelle lässt sich bei entsprechender Vorgabe von oberen und unteren Begrenzungswerten auch ein komplettes Reifendruck-Kennfeld vorgeben.

Sodann wird im Betrieb des Fahrzeugs die jeweils aktuelle Achslast der mit überwachten Fahrzeugrädern versehenen Achsen durch Lastsensoren ermittelt, als Daten (Lastdaten) an die Recheneinheit übermittelt und dort in einem Speicher hinterlegt. Die Übermittlung der Lastdaten kann beispielsweise über ein Funksignal an die Recheneinheit erfolgen, welches von einem Steuergerät im Fahrzeug gesendet wird, etwa von einem Bremsensteuergerät, welches mit entsprechenden Lastsensoren kommuniziert.

In dem in der Recheneinheit programmierten Algorithmus wird derjenige Reifendruck als Ausgangswert für die Detektion des maximal zulässigen Betrags des Absinkens zugrunde gelegt wird, der sich entsprechend der ermittelten Achslast aus den Daten der lastabhängigen Reifendruckkennlinie oder -tabelle ergibt.

Dem durch das Reifensensormodul an das Steuergerät zu übermittelnden Sensordatensatz werden dann durch den Algorithmus weitere Daten (Warnsignaldaten) hinzugefügt, wenn im Betrieb des Fahrzeugs durch den Drucksensor in einem überwachten Reifen ein Absinken des Reifendrucks - bzw. des ggf. temperaturkompensierten Betriebsdrucks - auf einen Wert detektiert wird, der den sich aus der lastabhängigen Reifendruckkennlinie oder -tabelle ergebenden Reifendruck über den vorgegebenen maximal zulässigen Betrag hinaus unterschreitet. Details zur Temperaturkompensation des Betriebsdrucks sind weiter unten beschrieben.

Bei der Typgenehmigung und einer dazu vorgesehenen Prüfung und Inbetriebnahme des Reifendruckkontrollsystems werden statt bisher eines einzigen Referenzdrucks die Werte der lastabhängigen Reifendruckkennlinie oder -tabelle als Referenzdruckwerte in der Recheneinheit des Reifendrucksensormoduls gespeichert, mindestens aber die Werte der wesentlichen Eckpunkte dieser Kennlinie oder Tabelle. Wesentliche Eckpunkt sind Anfangs- und Endwerte der Kennlinie für die Abhängigkeit des Reifendrucks von der Achslast. Im Betrieb ermittelt der in der Recheneinrichtung programmierte Algorithmus aus den übermittelten Lastdaten den für die aktuelle Achslast optimalen Reifendruck aus der Reifendruckkennlinie oder - tabelle und adaptiert die Unterdruckwarnung dadurch, dass für das Hinzufügen von weiteren Daten zur Erzeugung eines Warnsignals (Signaldaten) zum Sensordatensatz der optimale Reifendruck aus der Reifendruckkennlinie oder - tabelle als Referenzdruck bzw. als Ausgangswert für die Detektion des maximal zulässigen Betrags des Absinkens zugrunde gelegt wird.

Mit dem erfindungsgemäßen Verfahren ist es beispielsweise möglich, dass der Fahrzeugführer in Kenntnis einer sehr geringen Beladung den Reifendruck entsprechend einer lastabhängigen Reifendruckkennlinie manuell verringert, wobei eine Reifendruckkennlinie, die der im Steuergerät hinterlegten Reifendruckkennlinie entspricht, ihm etwa über ein Display vorgegeben wird oder in einem Handbuch vorhanden ist. Dadurch erfolgt eine Annäherung an die idealerweise erreichbare Reifenaufstandsfläche und eine Erhöhung einer Fahrsicherheit.

Da im Betrieb des Fahrzeugs eine Anpassung des Referenzdruck bzw. des Ausgangswerts für die Detektion des maximal zulässigen Druckverlusts erfolgt, wird durch das Reifendruckkontrollsystem auch keine Ausgabe eines Warnsignals erzeugt, solange nicht ein die Fahrsicherheit tatsächlich beeinflussender Druckverlust durch technische Fehlfunktionen, Diffusion oder Durchschlag entstanden ist.

Eine Weiterbildung des erfindungsgemäßen Verfahrens besteht darin, dass in einem oder mehreren Speichern der Recheneinheit Reifendruckwerte als Daten von Reifendruckkennlinien oder Reifendrucktabellen für unterschiedliche Reifenkonstruktionen oder Reifentypen hinterlegt sind. Auf diese Weise kann das Verfahren zum Betrieb des Reifendruckkontrollsystems für unterschiedliche Reifen angepasst werden, beispielsweise um nach einem Reifenwechsel zu Reifen mit anderem Lastindex ohne weitere Änderungen einsatzfähig zu bleiben.

In einer anderen Ausführung des erfindungsgemäßen Verfahrens erfolgt im Algorithmus eine Temperaturkompensation mit Temperaturdaten eines im Reifensensormodul vorgesehenen Temperatursensors. Dabei werden die durch den Drucksensor im Reifensensormodul gemessenen Druckdaten bzw. der gemessene Betriebsdruck auf einen Druck bei einer Referenztemperatur und entsprechend zugehörige Daten zurückgeführt. Damit entsteht eine Vergleichbarkeit des gemessenen Reifendrucks (Betriebsdrucks) mit den sich aus der lastabhängigen Reifendruckkennlinie oder -tabelle ergebenden Daten für den Reifendruck (Referenzdruck). Mit einer solchen Temperaturkompensation lässt sich die lastabhängige Reifendruckkennlinie oder -tabelle noch genauer mit dem in den oben genannten Regelungen erwähnten Betriebsdruck korrelieren, der ja eine Erwärmung des Reifens berücksichtigt.

In einer weiteren Ausbildung des erfindungsgemäßen Verfahrens werden die Daten der lastabhängigen Reifendruckkennlinie oder Reifendrucktabelle mit Hilfe eines im Algorithmus eingebundenen Programmteils anhand eines manuell vorgegebenen Lastindex und/oder einer Typkennzeichnung der jeweiligen den überwachten Fahrzeugrädern einer Achse zugeordneten Reifen berechnet und in einem Speicher der Recheneinrichtung hinterlegt. Damit kann auf einfache Weise für etwa spätere Weiterentwicklungen anhand des Lastindex eine lastabhängige Reifendruckkennlinie oder Reifendrucktabelle berechnet werden, wobei nur der Lastindex neu vorgegeben bzw. gespeichert werden muss.

Für ein Reifendruckkontrollsystem an einer Antriebsachse besteht eine Weiterbildung des erfindungsgemäßen Verfahrens darin, dass in einem oder mehreren Speichern der Recheneinrichtung Reifendruckwerte als Daten einer lastabhängigen Reifendruckkennlinie oder -tabelle für das Erreichen einer maximalen Traktion für unterschiedlichen Reifenkonstruktionen oder Reifentypen hinterlegt werden.

Eine Weiterbildung des erfindungsgemäßen Verfahrens besteht darin, dass dem zu übermittelnden Sensordatensatz weitere Daten (Warnsignaldaten) durch den Algorithmus hinzugefügt werden, wenn im Betrieb des Fahrzeugs der durch den Drucksensor in einem überwachten Reifen ermittelte Reifendruck einen vorgegebenen und die Reifendruckkennlinie oder -tabelle nach oben begrenzenden Reifendruck überschreitet, wenn also ein unzulässiger Überdruck im Reifen vorhanden ist. Die Überdruckwarnung ist unabhängig von der Beladung und bleibt daher im Vergleich zu den bisherigen Reifendrucküberwachungen unverändert, da sich diese Warnung auf potenzielle Schäden des Reifens durch einen für die Reifenkonstruktion absolut zu hohen Druck bezieht.

Eine weitere Ausbildung des Verfahrens besteht darin, dass die mit dem Sensordatensatz dem Steuergerät übermittelten Daten für den Reifendruck (Druckdaten), die Daten zur eindeutigen Identifikation des Reifensensormoduls (Identifikationsdaten) und die Daten des sich aus der lastabhängigen Reifendruckkennlinie oder -tabelle ergebenden Reifendrucks vom Steuergerät an damit kommunizierende Signalausgabegeräte im Fahrzeug oder an weitere Steuergeräte für Signalausgabegeräte gesendet werden und dort zur Darstellung mittels Display oder Bedieneinrichtungen (Human-Machine Interface, HMI) umwandelbar sind. Durch eine solche Ausbildung kann nicht nur der in einzelnen Fahrzeugrädern vorhandene Reifendruck ortsrichtig angezeigt werden, sondern parallel dazu auch die zur jeweiligen Beladung gehörigen Werte der Reifendruckkennlinien oder -tabellen, sodass etwa eine bei sehr niedriger Beladung gewünschte Absenkung des vorhandenen Betriebsdruck im Reifen durch den Fahrzeugführer vereinfacht wird, da der aktuelle Druck ablesbar ist.

Eine weitere Verwendung des erfindungsgemäßen Verfahrens für den Betrieb einer Reifendrucknachfüllanlage in einem Fahrzeug ist dadurch gegeben, dass die mit dem Sensordatensatz an das Steuergerät übermittelten Daten auch die Daten des sich aus der lastabhängigen Reifendruckkennlinie oder -tabelle ergebenden Reifendrucks enthalten, die dann über das Steuergerät des Fahrzeugs als Regeleingangsgröße für eine Regelung der Reifendrucknachfüllanlage bereitgestellt wird bzw. an deren Steuerung übermittelt wird. Damit entfällt - jedenfalls für eine gewünschtes Absenken des Reifendrucks - ein manueller Eingriff durch den Fahrzeugführer, sodass der Reifendruck des Fahrzeugs automatisch auf unterschiedlich ausgebildete Beladungen bzw. Belastungen eingeregelt werden kann. Das Fahrzeug ist so immer mit dem optimalen Reifendruck für die aktuelle Beladung unterwegs. Dies würde zusätzlichen Kraftstoff für den Betrieb der Druckregelanlage sparen, da im Teillastbereich unnötiges Nachfüllen des Reifendrucks durch die Druckregelanlage vermieden wird. Der Fahrkomfort erhöht sich dadurch und der Verschleiß wird reduziert.

In einem Reifendruckkontrollsystems ist zur Überwachung des Reifendrucks an einem Fahrzeugrad ein Reifensensormodul geeignet, welches eine über Antennen im Fahrzeug mit einem elektronischen Steuergerät des Fahrzeugs kommunizierende Sendeeinheit, eine programmierbare Recheneinheit sowie einen Drucksensor und einen Temperatursensors aufweist, wobei durch die Recheneinheit die durch den Drucksensor ermittelten Druckdaten, die durch den Temperatursensor ermittelten Temperaturdaten sowie die Daten eines im Fahrzeug vorgesehenen Lastsensors verarbeitbar sind, wobei das Reifensensormodul einen in der Recheneinheit programmierten Algorithmus zur Durchführung des erfindungsgemäßen Verfahrens aufweist.

In einer Ausbildung ist das jeweilige dem Fahrzeugrad zugeordnete Reifensensormodul mit der Sendeeinheit versehen, die als Sende- und Empfangseinheit ausgebildet ist und über Antennen im Fahrzeug mit dem elektronischen Steuergerät des Fahrzeugs kommuniziert. Durch eine solche Ausbildung lassen sich Teile der in der Recheneinheit vorhandenen Funktionen oder Programmierungen auch im Steuergerät integrieren.

In einer Weiterbildung weist das Reifensensormodul einen Energiespeicher auf. Damit ist eine sichere Übertragung unabhängig von einer äußeren Energiezufuhr möglich.

In einer weiteren Ausbildung weist das Reifensensormodul einen Lastsensor zur Ermittlung der jeweils aktuellen Radlast oder Achslast auf. Das vereinfacht eine Gesamtarchitektur von Elektronik in einem Reifendruckkontrollsystem, da auf separate Lastsensoren im Fahrwerksbereich und die Bereitstellung mehrfacher zusätzlicher Übertragungswege für die Lastdaten verzichtet werden kann.

Zur Durchführung des erfindungsgemäßen Verfahrens ist in einer programmierbaren Recheneinheit eines Reifensensormoduls in einem Fahrzeug ein Computerprogramm aufgeladen und gespeichert, welches einen Algorithmus umfasst mit Befehlen für das Steuergerät zur Durchführung des erfindungsgemäßen Verfahrens.

Zur Anwendung kommen kann das erfindungsgemäße Verfahren in einem Fahrzeug mit an jeweils drucküberwachten Fahrzeugrädern des Fahrzeugs vorgesehenen programmierbaren und mit einer Recheneinheit versehenen Reifensensormodulen (RSM), welche zur Durchführung des erfindungsgemäßen Verfahrens jeweils über ihre Sendeeinheit und über Antennen im Fahrzeug mit einem elektronischen Steuergerät des Fahrzeugs kommunizieren und diesem einen Sensordatensatz übermitteln, der von einem Drucksensor im Reifensensormodul ermittelte Daten für den Reifendruck (Druckdaten), von einem Temperatursensor im Reifensensormodul ermittelte Daten für die Temperatur (Temperaturdaten), Daten zur eindeutigen Identifikation (Identifikationsdaten) des Reifensensormoduls und weitere Daten (Warnsignaldaten) enthält, wobei an dem Fahrzeug oder an den Reifensensormodulen Lastsensoren zur Ermittlung der jeweils aktuellen Achslast der mit überwachten Fahrzeugrädern versehenen Achsen vorgesehen sind, wobei die Lastsensoren mit der Recheneinheit kommunizieren und ihre Daten (Lastdaten) an die Recheneinheit übermitteln.

Anhand eines Ausführungsbeispiels soll die Erfindung näher erläutert werden. Es zeigen
- Fig. 1: Ein Nutzfahrzeug, dessen Fahrzeugräder durch ein Reifendruckkontrollsystem mit Hilfe des erfindungsgemäßen Verfahrens drucküberwacht sind, in Form einer Prinzipskizze,
- Fig. 2: einen prinzipiellen Ablauf eines erfindungsgemäßen Verfahrens in einem vereinfachten Ablaufplan,
- Fig. 3: beispielhaft einen Ausdruck einer vorgegebenen Reifendruckkennlinie, wie sie mit Daten in einem Speicher eines Steuergerätes hinterlegt ist,
- Fig. 4: ein weiteres Beispiel einer Reifendruckkennlinie, welche für einen weiteren Typ eines Nutzfahrzeugreifens die Abhängigkeit des Reifendrucks von der Achslast zeigt.

In den Figuren können gleiche oder ähnliche Elemente mit denselben Bezugszeichen referenziert sein. Zur Verdeutlichung der Erfindung ist es vorteilhaft, die Figuren in der Zusammenschau zu betrachten.

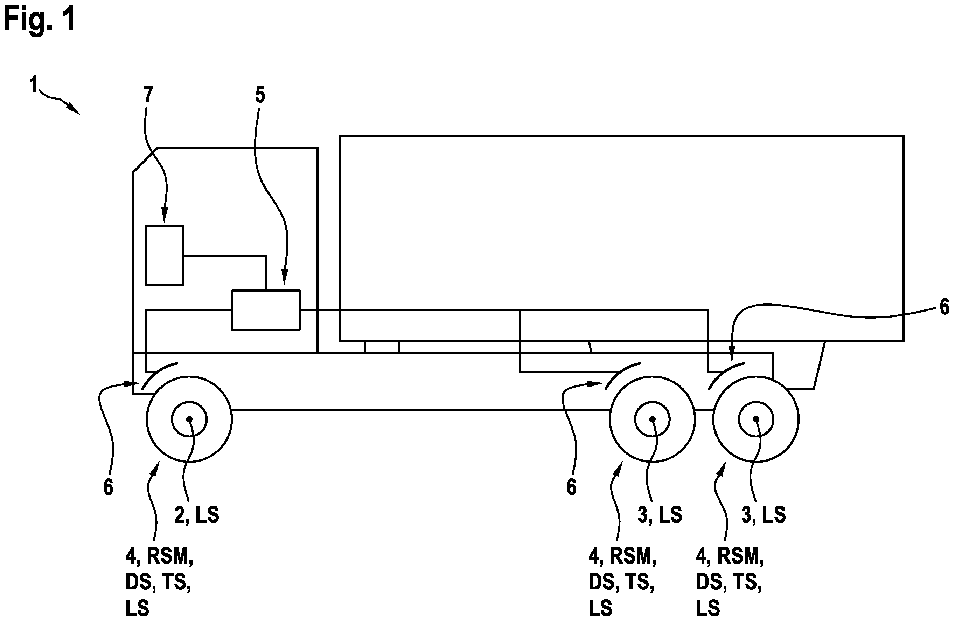

Fig. 1 zeigt in Form einer Prinzipskizze ein Nutzfahrzeug 1 mit einer Vorderachse 2 und einer hinteren Doppelachse 3, dessen Fahrzeugräder 4 durch ein Reifendruckkontrollsystem drucküberwacht sind. Hierzu sind an allen Fahrzeugrädern 4 Reifensensormodule RSM angeordnet, welche jeweils eine programmierbare elektronische Recheneinheit 14, einen Drucksensor DS und eine über Antennen 6 im Fahrzeug 1 mit einem elektronischen Steuergerät 5 des Fahrzeugs 1 kommunizierende Sendeeinheit SE aufweisen. Weiterhin weisen die Reifensensormodule RSM einen Temperatursensor TS zur Ermittlung einer Reifentemperatur (Temperaturdaten) sowie einen Lastsensor LS zur Ermittlung einer auf die Fahrzeugräder wirkenden Lasten (Lastdaten) auf.

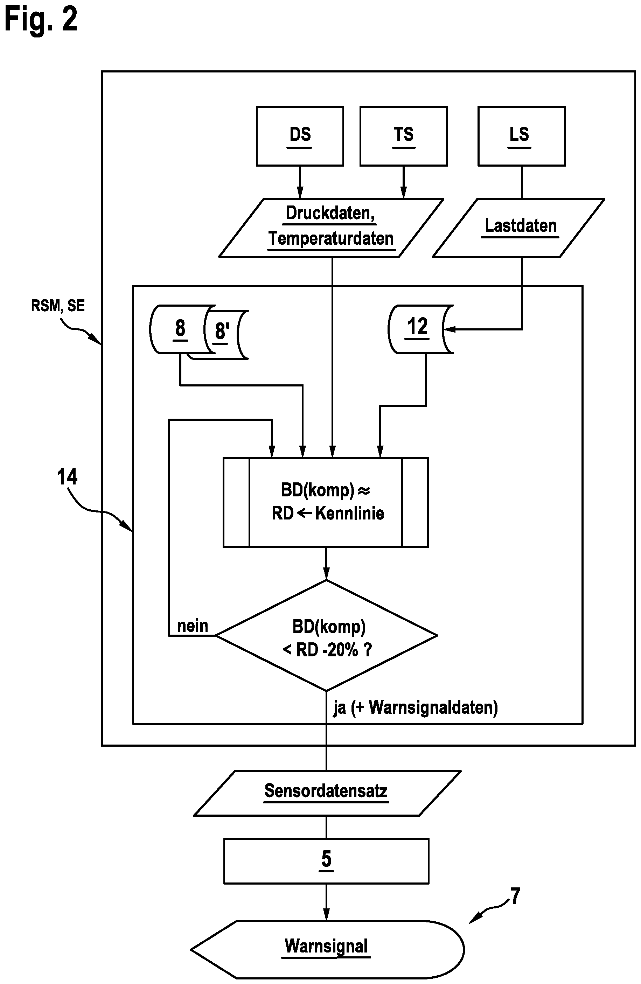

Reifensensormodule als solche mit verschiedenen integrierten Sensoren und Sendeeinheit sind im Stand der Technik vielfach bekannt und in Fig.1 nicht im Detail dargestellt. Struktur und Funktionsmerkmale der hier verwendeten Reifensensormodule RSM ergeben sich jedoch am besten in der Zusammenschau der Fig. 1 mit Fig. 2, die den prinzipiellen Ablauf des erfindungsgemäßen Verfahrens in einem vereinfachten Funktions- und Ablaufplan darstellt.

Im Nutzfahrzeug 1 ist ein programmierbares elektronischen Steuergerät 5 vorgesehen, welches u.a. das Reifendruckkontrollsystems des Nutzfahrzeugs 1 steuert und dazu über Antennen 6 in der Nähe der Fahrzeugräder 4 mit den Reifensensormodulen RSM kommuniziert. Jedes Reifensensormodul RSM übermittelt mit seiner zugehörigen Sendeeinheit SE dem Steuergerät 5 periodisch jeweils einen Sensordatensatz, der die vom Drucksensor DS ermittelte Daten für den Reifendruck (Druckdaten) und die Daten zur eindeutigen Identifikation des Reifensensormoduls (Identifikationsdaten) enthält.

Darüber hinaus werden dem zu übermittelnden Sensordatensatz dann weitere Daten (Warnsignaldaten) hinzugefügt, wenn im Betrieb des Fahrzeugs 1 durch den Drucksensor DS ein Absinken des Reifendrucks in einem überwachten Reifen über einen vorgegebenen maximal zulässigen Betrag hinaus detektiert wird.

Diese weiteren Daten, die als Warnsignaldaten dem Sensordatensatz hinzugefügten werden, sind durch das Steuergerät 5 in solch einer Weise verarbeitbar, dass sie zur Erzeugung eines Warnsignals über vom Steuergerät 5 ansprechbare Signalausgabegeräte 7 im Fahrzeug genutzt werden können.

Ein in der Recheneinheit 14 programmierter Algorithmus sieht in diesem Ausführungsbeispiel das Hinzufügen dieser weiteren Daten (Warnsignaldaten) zum Sensordatensatz vor, wenn im Betrieb des Fahrzeugs 1 durch den Drucksensor DS ein Absinken des Reifendrucks in einem überwachten Reifen über einen vorgegebenen maximal zulässigen Betrag von 20 % hinaus detektiert wird.

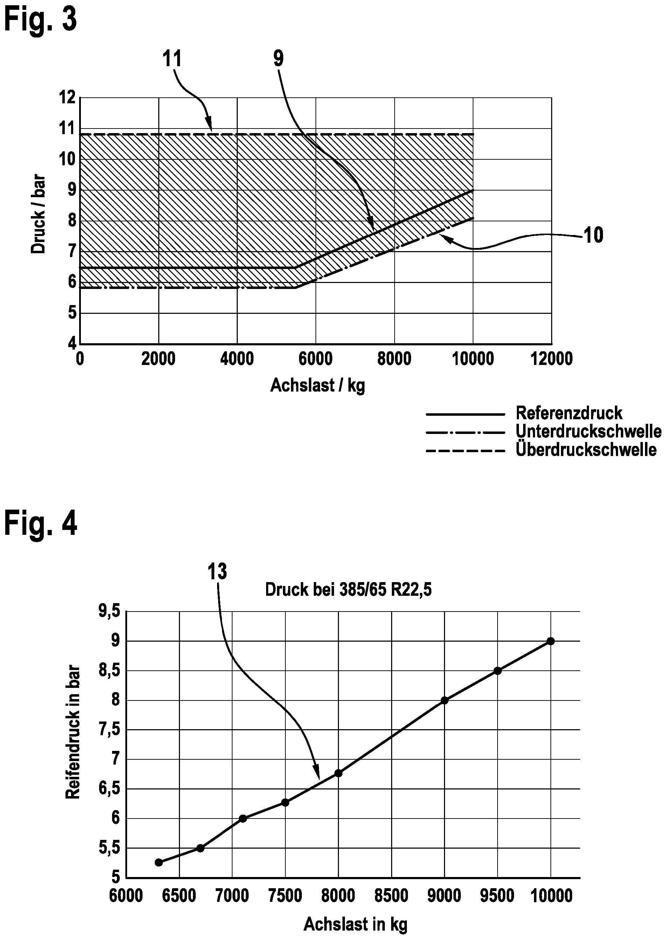

Dabei wird in dem in der Recheneinheit 14 programmierten Algorithmus derjenige Reifendruck als Ausgangswert für die Detektion des maximal zulässigen Betrags des Absinkens zugrunde gelegt wird, der sich gemäß der durch die Lastsensoren LS ermittelten Achslast (Lastdaten) aus den Daten einer lastabhängigen Reifendruckkennlinie 9 ergibt, wie sie beispielhaft in Fig. 3 gezeigt ist.

Die Daten dieser Reifendruckkennlinie 9 sind in einem Speicher 8 der Recheneinheit 14 des Reifensensormoduls RSM hinterlegt, wobei die Reifendruckkennlinie 9 eine Abhängigkeit eines aufgrund der Reifenkonstruktion erforderlichen Reifendrucks von der durch Beladung und Gewicht des Fahrzeugs erzeugten Achslast (bzw. Radlast) darstellt. Die Daten einer lastabhängigen Reifendruckkennlinie sind durch einen Reifenhersteller vorgegeben.

Fig. 3 zeigt einen Ausdruck der gespeicherten Daten der Reifendruckkennlinie 9 in einem Koordinatensystem, wobei auf der Abszisse unterschiedliche Achslasten von 0 bis 10.000 kg und auf der Ordinate der Reifendruck in bar aufgetragen sind. Die Reifendruckkennlinie 9 zeigt für einen bestimmten Nutzfahrzeugreifen den optimalen Reifendruck, der aufgrund der Reifenkonstruktion bei unterschiedlichen Achslasten erforderlich ist, um die ideale Reifenaufstandsfläche zu erreichen.

Die in Fig.3 dargestellte Reifendruckkennlinie 9 stellt dabei einen Referenzdruck RD dar, nämlich einen vom Reifenhersteller vorgegebenen lastabhängigen Reifendruck ohne Berücksichtigung einer Temperaturkompensation. Eine untere Grenzlinie 10 (Unterdruckschwelle) stellt den Reifendruck dar, um den der Referenzdruck RD gemäß Reifendruckkennlinie 9 absinken kann, ohne dass die Ausgabe eines Warnsignals mittels dem Sensordatensatz hinzugefügten Warnsignaldaten initiiert wird. Ist der Betrag des Druckverlustes größer, d. h. wird die Grenzlinie 10 unterschritten, wird eine Warnung initiiert. Eine obere Grenzlinie 11 stellt die absolute Überdruckschwelle dar, die für den jeweiligen Reifentyp konstant und nicht lastabhängig ist. Überschreitet der Innendruck des Reifens diese Schwelle, ertönt ebenfalls ein Warnsignal.

Die Lastdaten, die die im Betrieb des Fahrzeugs jeweils vorhandene aktuelle Achslast beschreiben, werden durch die Lastsensoren LS im Reifensensormodul ermittelt, an die Recheneinheit 14 übermittelt und dort in einem Speicher 12 hinterlegt.

Wie oben erwähnt, ist im Reifensensormodul RSM auch ein Temperatursensor TS vorgesehen, der Daten über die Temperatur des Reifens (Temperaturdaten) an die Recheneinheit 14 übermittelt. Im Algorithmus ist mit den Temperaturdaten eine Temperaturkompensation vorgesehen, bei der der durch den Drucksensor DS gemessene Betriebsdrucks BD auf den Druck BD(komp) bei einer Referenztemperatur und somit auf den Referenzdruck RD entsprechend der lastabhängigen Reifendruckkennlinie 9 für den Reifendruck zurückgeführt wird.

Der in der Recheneinheit 14 programmierte Algorithmus greift verfahrensgemäß auf die Daten der Speicher 8 und 12 zu und fügt dem durch das Reifensensormodul RSM and das Steuergerät 5 zu übermittelnden Sensordatensatz die entsprechenden Warnsignaldaten hinzu, wenn im Betrieb des Fahrzeugs 1 durch den Drucksensor DS in einem überwachten Reifen ein Absinken des Reifendrucks auf einen Wert detektiert wird, der - temperaturkompensiert - den sich aus der lastabhängigen Reifendruckkennlinie 9 ergebenden Reifendruck über den vorgegebenen maximal zulässigen Betrag, hier 20 %, unterschreitet.

Das Steuergerät 5 verarbeitet in dem Fall die Warnsignaldaten zur Erzeugung und Ausgabe eines Warnsignals über das hier eingesetzte Signalausgabegerät 7, welches dazu ein Display aufweist und mit einem Tongenerator versehen ist, der ein entsprechendes akustisches Warnsignal abgibt.

Sofern kein Absinken des Reifendrucks unter den vorgegebenen maximal zulässigen Betrag hinaus detektiert wird, wird die Programmroutine des Algorithmus in der Recheneinheit 14 periodisch wiederholt.

Fig. 4 zeigt den Ausdruck der Daten einer weitere Reifendruckkennlinie 13 für einen anderen Reifentyp, beispielsweise für einen Reifen der Größe 385/65 mit einem Felgenradius 22,5 Zoll. Man erkennt, dass die Reifendruckkennlinien 9 und 13 eine sehr ähnliche, nur etwas in Bezug auf den Betrag des optimalen Reifendrucks verschobene Steigung im hinteren Bereich aufweisen. Die Daten einer solchen weiteren Reifendruckkennlinie 13 für einen unterschiedlichen Reifentyp können dann etwa in einem weiteren Speicher 8' der Recheneinheit hinterlegt werden.

### Bezugszeichen (Teil der Beschreibung)

- 1: Nutzfahrzeug
- 2: Vorderachse
- 3: Hinterachse/Doppelachse
- 4: Fahrzeugrad mit Reifensensormodulen RSM
- 5: Steuergerät
- 6: Antenne
- 7: Signalausgabegerät
- 8: Speicher für Daten von Reifendruckkennlinien
- 9: Ausdruck einer gespeicherten Reifendruckkennlinie
- 10: Grenzlinie - Unterdruckschwelle
- 11: Grenzlinie - Überrdruckschwelle
- 12: Speicher für Lastdaten
- 13: Ausdruck einer weiteren Reifendruckkennlinie
- 14: Recheneinheit im Reifensensormodul

- BD: Betriebsdruck
- BD(komp): Betriebsdruck, temperaturkompensiert
- DS: Drucksensor
- LS: Lastsensor
- RD: Referenzdruck aus einer Reifendruckkennlinie
- RSM: Reifensensormodul
- TS: Temperatursensor
- SE: Sendeeinheit

## Patentansprüche

1. Verfahren zum Betrieb eines Reifendruckkontrollsystems in einem Fahrzeug (1), bei dem ein Reifendruck eines Fahrzeugrades (4) durch ein dem Fahrzeugrad zugeordnetes Reifensensormodul (RSM) überwacht wird, welches einen Drucksensor (DS) und eine über Antennen (6) im Fahrzeug (1) mit einem elektronischen Steuergerät (5) des Fahrzeugs (1) kommunizierende Sendeeinheit (SE) aufweist, wobei das Reifensensormodul (RSM) über seine Sendeeinheit (SE) periodisch einen Sensordatensatz an das Steuergerät (5) übermittelt, der mindestens vom Drucksensor (DS) ermittelte Daten für den Reifendruck (Druckdaten) sowie Daten zur eindeutigen Identifikation (Identifikationsdaten) des Reifensensormoduls (RSM) enthält,
**dadurch gekennzeichnet,**
- **dass** im Reifensensormodul (RSM) eine programmierbare Recheneinheit (14) vorgesehen ist, in der ein Algorithmus programmiert ist, durch welchen dem zu übermittelnden Sensordatensatz weitere Daten (Warnsignaldaten) hinzugefügt werden, wenn im Betrieb des Fahrzeugs (1) durch den Drucksensor (DS) ein Absinken des Reifendrucks in einem überwachten Reifen über einen vorgegebenen maximal zulässigen Betrag hinaus detektiert wird,
- **dass** in einem Speicher (8, 8') der Recheneinheit (14) des Reifensensormoduls (RSM) Reifendruckwerte als Daten einer lastabhängigen Reifendruckkennlinie (9, 13) oder Reifendrucktabelle hinterlegt sind, die eine Abhängigkeit eines aufgrund einer Reifenkonstruktion erforderlichen Reifendrucks von einer durch Beladung und Gewicht des Fahrzeugs erzeugten Achslast (bzw. Radlast) darstellt, und
- **dass** im Betrieb des Fahrzeugs die jeweils aktuelle Achslast der mit überwachten Fahrzeugrädern (4) versehenen Achsen durch Lastsensoren (LS) ermittelt, als Daten (Lastdaten) an die Recheneinheit (14) übermittelt und dort in einem Speicher (12) hinterlegt wird, und
- **dass** in dem in der Recheneinheit (14) programmierten Algorithmus derjenige Reifendruck als Ausgangswert für die Detektion des maximal zulässigen Betrags des Absinkens zugrunde gelegt wird, der sich entsprechend der ermittelten Achslast aus den Daten der lastabhängigen Reifendruckkennlinie (9,13) oder Reifendrucktabelle ergibt, und
- **dass** dem durch das Reifensensormodul (RSM) an das Steuergerät (5) zu übermittelnden Sensordatensatz weitere Daten (Warnsignaldaten) durch den Algorithmus hinzugefügt werden, wenn im Betrieb des Fahrzeugs (1) durch den Drucksensor (DS) in einem überwachten Reifen ein Absinken des Reifendrucks auf einen Wert detektiert wird, der den sich aus der lastabhängigen Reifendruckkennlinie (9, 13) oder Reifendrucktabelle ergebenden Reifendruck über den vorgegebenen maximal zulässigen Betrag hinaus unterschreitet,
- und **dass** die hinzugefügten Daten (Warnsignaldaten) durch das Steuergerät (5) zur Erzeugung eines Warnsignals über vom Steuergerät (5) ansprechbare Signalausgabegeräte (7) im Fahrzeug verarbeitet werden.

2. Verfahren nach Anspruch 1, bei dem in einem oder mehreren Speichern (8, 8') der Recheneinheit (14) Reifendruckwerte als Daten von lastabhängigen Reifendruckkennlinien (9, 13) oder Reifendrucktabellen für unterschiedliche Reifenkonstruktionen oder Reifentypen hinterlegt sind.

3. Verfahren nach einem der vorhergehenden Ansprüche, bei dem das Reifensensormodul (RSM) einen Temperatursensor (TS) zur Ermittlung von Daten über die Reifentemperatur (Temperaturdaten) aufweist und im Algorithmus mit den Temperaturdaten eine Temperaturkompensation der durch den Drucksensor (DS) gemessenen Daten erfolgt.

4. Verfahren nach einem der vorhergehenden Ansprüche, bei dem die Daten der lastabhängigen Reifendruckkennlinie (9, 13) oder Reifendrucktabelle mit Hilfe eines im Algorithmus eingebundenen Programmteils anhand eines vorgegebenen Lastindex und/oder einer Typkennzeichnung der jeweiligen den überwachten Fahrzeugrädern einer Achse zugeordneten Reifen berechnet und in einem Speicher (8, 8') der Recheneinheit (14) hinterlegt werden.

5. Verfahren nach einem der vorhergehenden Ansprüche, bei dem in einem oder mehreren Speichern (8, 8') der Recheneinheit (14) Reifendruckwerte als Daten einer lastabhängigen Reifendruckkennlinie oder Reifendrucktabelle für das Erreichen einer maximalen Traktion für unterschiedlichen Reifenkonstruktionen oder Reifentypen hinterlegt werden.

6. Verfahren nach einem der vorhergehenden Ansprüche, bei dem dem zu übermittelnden Sensordatensatz weitere Daten (Warnsignaldaten) durch den Algorithmus hinzugefügt werden, wenn im Betrieb des Fahrzeugs (1) der durch den Drucksensor (DS) in einem überwachten Reifen ermittelte Reifendruck einen vorgegebenen und die Reifendruckkennlinie (9,13) oder Reifendrucktabelle nach oben begrenzenden Reifendruck überschreitet.

7. Verfahren nach einem der vorhergehenden Ansprüche, bei dem die mit dem Sensordatensatz an das Steuergerät (5) übermittelten Daten auch die Daten des sich aus der lastabhängigen Reifendruckkennlinie (9,13) oder Reifendrucktabelle ergebenden Reifendrucks enthalten und vom Steuergerät (5) an damit kommunizierende Signalausgabegeräte (7) im Fahrzeug (1) oder an weitere Steuergeräte für Signalausgabegeräte gesendet werden und dort jeweils zur Darstellung mittels Displays oder Bedieneinrichtungen umwandelbar sind.

8. Verwendung des Verfahrens nach einem der vorhergehenden Ansprüche für den Betrieb einer Reifendrucknachfüllanlage in einem Fahrzeug (1), **dadurch gekennzeichnet, dass** die mit dem Sensordatensatz an das Steuergerät (5) übermittelten Daten auch die Daten des sich aus der lastabhängigen Reifendruckkennlinie (9,13) oder Reifendrucktabelle ergebenden Reifendrucks enthalten, die dann über das Steuergerät (5) des Fahrzeugs (1) als Regeleingangsgröße für eine Regelung oder Steuerung der Reifendrucknachfüllanlage bereitgestellt werden.

9. Reifensensormodul (RSM) in einem Reifendruckkontrollsystem zur Überwachung eines Reifendrucks an einem Fahrzeugrad (4), wobei das Reifensensormodul (RSM) eine über Antennen im Fahrzeug (4) mit einem elektronischen Steuergerät (5) des Fahrzeugs (4) kommunizierende Sendeeinheit (SE), eine programmierbare Recheneinheit (14) sowie einen Drucksensor (DS) und einen Temperatursensors (TS) aufweist, wobei durch die Recheneinheit (14) die durch den Drucksensor (DS) ermittelten Druckdaten, die durch den Temperatursensor (TS) ermittelten Temperaturdaten sowie die durch einen im Fahrzeug vorgesehenen Lastsensor (LS) ermittelten Lastdaten verarbeitbar sind, wobei das Reifensensormodul (RSM) einen in der Recheneinheit (14) programmierten Algorithmus zur Durchführung des Verfahrens nach einem der Ansprüche 1 bis 7 aufweist.

10. Reifensensormodul (RSM) nach Anspruch 9, wobei die Sendeeinheit (SE) als Sende- und Empfangseinheit ausgebildet ist, die über Antennen (6) im Fahrzeug (1) mit dem elektronischen Steuergerät (5) des Fahrzeugs kommuniziert.

11. Reifensensormodul (RSM) nach Anspruch 9 oder 10, welches einen Energiespeicher zur Energieversorgung der Sensoren und der Recheneinheit aufweist.

12. Reifensensormodul (RSM) nach einem der Ansprüche 9 bis 11, welches einen Lastsensor (LS) zur Ermittlung der Daten der jeweils aktuellen Radlast oder Achslast aufweist.

13. Computerprogramm, umfassend einen Algorithmus mit Befehlen für eine programmierbare Recheneinheit (14) eines Reifensensormoduls (RSM) nach einem der Ansprüche 9 bis 12 zur Durchführung des Verfahrens nach einem der Ansprüche 1 bis 7.

14. Fahrzeug (1), insbesondere Nutzfahrzeug, mit an jeweils drucküberwachten Fahrzeugrädern (4) des Fahrzeugs (1) vorgesehenen und mit einer programmierbaren Recheneinheit versehenen Reifensensormodulen (RSM) nach einem der Ansprüche 9 bis 12, welche jeweils über ihre Sendeeinheit (SE) und über Antennen (6) im Fahrzeug mit einem elektronischen Steuergerät (5) des Fahrzeugs (4) kommunizieren und dem elektronischen Steuergerät (5) einen Sensordatensatz übermitteln, der von einem oder dem Drucksensor (DS) im Reifensensormodul (RSM) ermittelte Daten für den Reifendruck (Druckdaten), von einem oder dem Temperatursensor (TS) im Reifensensormodul (RSM) ermittelte Daten für die Temperatur (Temperaturdaten), Daten zur eindeutigen Identifikation (Identifikationsdaten) des Reifensensormoduls (RSM) und weitere Daten (Warnsignaldaten) enthält, wobei an dem Fahrzeug oder an den Reifensensormodulen (RSM) Lastsensoren (LS) zur Ermittlung der jeweils aktuellen Achslast der mit überwachten Fahrzeugrädern versehenen Achsen vorgesehen sind, wobei die Lastsensoren (LS) mit der Recheneinheit (14) kommunizieren und Daten (Lastdaten) an die Recheneinheit (14) übermitteln.
